# EUROPEAN PATENT APPLICATION

(11) **EP 1 662 451 A1**
(43) Date of publication of application: **31.05.2006**
(21) Application number: 05257152.8
(22) Date of filing: 21.11.2005
(51) Int. Cl.: G07F 19/00, G07F 7/10

(54) **Payment system for restaurant using electronic money**

(30) Priority: 25.11.2004 JP 2004340387
(71) Applicant: Sanden Corporation, Isesaki-shi, Gunma 372-8502 (JP)
(72) Inventor: Nakajima, Yasunari c/o Sanden Corporation, Iseaki-shi, Gunma 372-85025 (JP)
(74) Representative: Haley, Stephen

(57) **Abstract**

A payment system for restaurant having a reader/writer unit (100) and a control unit (300), wherein the control unit (300) includes a communication control section (310), which controls data communication with an external computer (500) via a network (400). The external computer (500) accesses to setting information stored in a setting information storing section (330) of the control unit (300).

## Description

The present invention relates to a payment system for restaurant for paying the bill for foods and drinks in a restaurant without using cash.

Conventionally, as a payment system for restaurant of this type, a system described in Japanese Patent Publication 8-212255 is known. In this system, plural restaurant terminals and a computer are connected to each other by a communication line. Each of the restaurant terminals includes column buttons for menu item selection and a card reader/writer for reading data from and writing data in a prepaid card, an ID card, and the like. When an inserted card is a prepaid card, the restaurant terminal performs processing for debiting the bill for a menu item selected by a column button to the prepaid card. On the other hand, when an inserted card is not a prepaid card but an ID card, the restaurant terminal stores the bill for a menu item selected by a column button and identification information read from the ID card in a memory. In the payment system for restaurant, in order to cope with a menu change for each time frame, the computer transmits menu information to the restaurant terminals in a predetermined time frame. When each of the restaurant terminals receives the menu information from the computer, the restaurant terminal updates information in the memory according to the menu information.

However, in the conventional system, the computer is indispensable for properly maintaining a menu setting at the time of a system operation and it is necessary to always connect the computer and the restaurant terminals. Thus, cost for building the system is high. In addition, it is necessary to transmit data from the computer in order to perform menu setting. Thus, it is impossible to perform menu setting individually in the restaurant terminals. Therefore, the conventional system lacks flexibility at the time of an operation.

It is an object of the invention to provide a payment system for restaurant that can carry out flexible setting work and can be built at low cost.

In order to attain the object, the invention provides a payment system for restaurant including a reader/writer unit which reads data from and writes data in a non-contact IC chip functioning as an electronic wallet in a non-contact manner and a control unit which performs payment by electronic money using the reader/writer unit. The control unit includes setting information inputting means for inputting setting information, setting information storing means for storing the setting information inputted, payment processing means for performing payment process by the electronic money using the reader/writer unit on the basis of the setting information stored in the setting information storing means, and a communication control means for controlling data communication with an external computer via a network. The control unit makes the external computer accessible to the setting information storing means.

According to the invention, it is possible to input and update setting information for determining an operation for the payment processing from both the setting information inputting means and the external computer. This is preferable in terms of flexibility of an operation. The external computer is not always necessary at the time of an operation. Thus, it is possible to build the system at low cost. Moreover, it is possible to check setting information from the external computer as required. This makes it possible to centrally manage control units using the external computer.

Objects, constitutions, and effects of the invention other than other described above will be apparent in the following detailed explanation.

### In the Drawings;

FIG. 1 is a diagram of a payment system for restaurant;
FIG. 2 is a functional block diagram of a control unit;
FIG. 3 is an external perspective view of a reader/writer unit;
FIG. 4 is a functional block diagram of the reader/writer unit;
FIG. 5 is an external perspective view of a menu selecting unit;
FIG. 6 is a functional block diagram of the menu selecting unit;
FIG. 7 is a flowchart for explaining an operation concerning setting information in the payment system for restaurant; and
FIG. 8 is a flowchart for explaining payment processing in the payment system for restaurant.

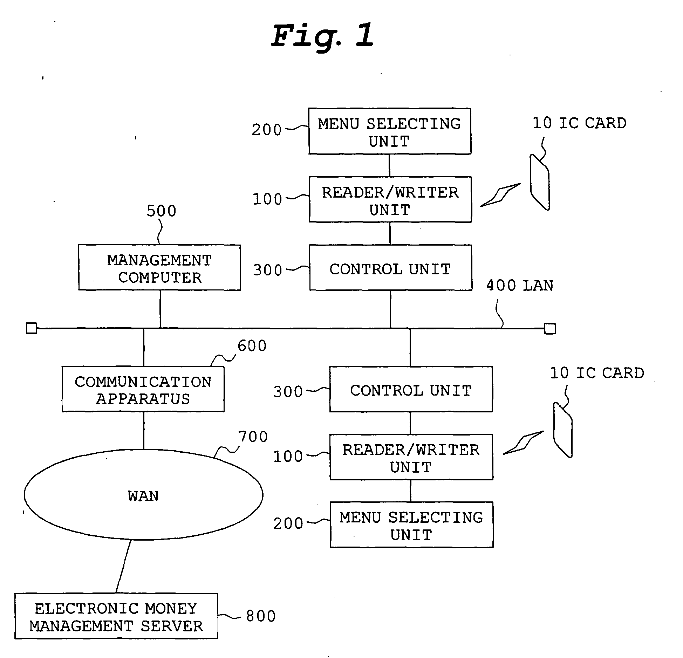

A payment system for restaurant according to an embodiment of the invention will be explained with reference to the drawings. FIG. 1 is a system diagram of the payment system for restaurant.

The payment system for restaurant is a system for paying a restaurant bill with electronic money using an IC card. A non-contact IC chip functioning as an electronic wallet is built in the IC card. As shown in FIG. 1, the payment system for restaurant includes a reader/writer unit 100 that reads data from and writes data in an IC card 10 in a non-contact manner, a menu selecting unit 200 for selecting a menu, and a control unit 300 that performs payment processing by electronic money for the bill of foods and beverages selected by the menu selecting unit 200 using the reader/writer unit 100.

The control unit 300, the reader/writer unit 100, and the menu selecting unit 200 are connected to be capable of communicating with one another. Any communication format and connection configuration for the control unit 300, the reader/writer unit 100, and the menu selecting unit 200 may be used. In this embodiment, a serial bus system is adopted to connect the units in a daisy chain. The payment system for restaurant includes plural sets (in an example in FIG. 1, two sets) of the reader/writer unit 100, the menu selecting unit 200, and the control unit 300.

The control units 300 are capable of communicating with a management computer 500 via a Local Area Network (LAN) 400 provided in a restaurant. The management computer 500 manages setting information (described later) for the control units 300. Note that the management computer 500 has to be connected to the LAN 400 only when the setting information is updated or acquired and is not always required for payment processing for a restaurant bill.

A communication apparatus 600 consisting of a modem, a router and the like is connected to the LAN 400. The communication apparatus 600 is connectable to a Wide Area Network (WAN) 700 such as the Internet or a public line network. Consequently, the control units 300 are capable of communicating with an electronic money management server 800 via the LAN 400, the communication apparatus 600, and the WAN 700. The electronic money management server 800 is managed and operated by an operator for electronic money. The electronic money management server 800 receives information on payment by the electronic money processed in the payment system for restaurant from the control units 300 and performs management for the electronic money on the basis of the information received.

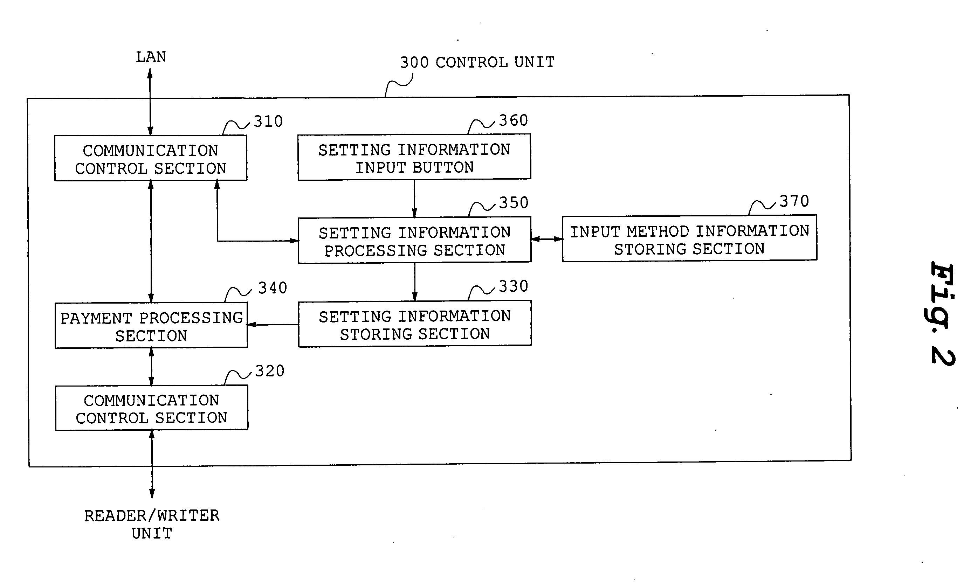

A functional block diagram of the control unit 300 is shown in FIG. 2. The control unit 300 includes a communication control section 310 for connection to the LAN 400, a communication control section 320 for connection to the reader/writer unit 100, a setting information storing section 330 that stores setting information for payment processing, and a payment processing section 340 that performs payment processing on the basis of the setting information stored in the setting information storing section 330. Examples of the setting information include various kinds of information. In this embodiment, information for determining "whether it is possible to make payment collectively for plural menus or payment is performed for each menu" (hereinafter referred to as "collective payment possibility information") is explained as an example. As other kinds of setting information, there are, for example, network setting information such as an IP address, shop information, and price information of each menu. In this embodiment, in order to simplify the explanation, only the collective payment possibility information will be explained.

The control unit 300 includes a setting information processing section 350 and a setting information input button 360. The setting information processing section 350 inputs and updates setting information for the setting information storing section 330. The setting information input button 360 is annexed to a housing (not shown) of the control unit 300 and is operated by an administrator. The setting information processing section 350 controls an access from the management computer 500 to the setting information storing section 330 via the LAN 400. Specifically, the setting information processing section 350 updates the setting information storing section 330 on the basis of setting information received from the management computer 500 and transmits the setting information stored in the setting information storing section 330 to the management computer 500 in response to a request from the management computer 500. The control unit 300 includes an input method information storing section 370 that stores information for determining a method of inputting setting information (input method information). The setting information processing section 350 makes it possible to restrict, as required, an input of setting information from the management computer 500 and an input of setting information from the setting information input button 360 on the basis of the input method information stored in the input method information storing section 370. The setting information processing section 350 makes it possible to update the input method information stored in the input method information storing section 370 from the management computer 500, which is permitted to input setting information, or the setting information input button 360. Note that, depending on an operation mode, the setting information processing section 350 may make it possible to update the input method information from both or one of the management computer 500 and the setting information input button 360 regardless of permission for input of setting information.

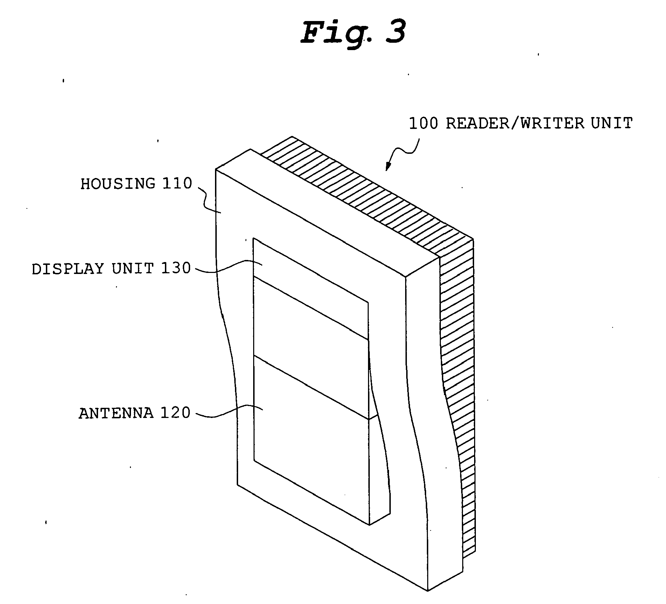

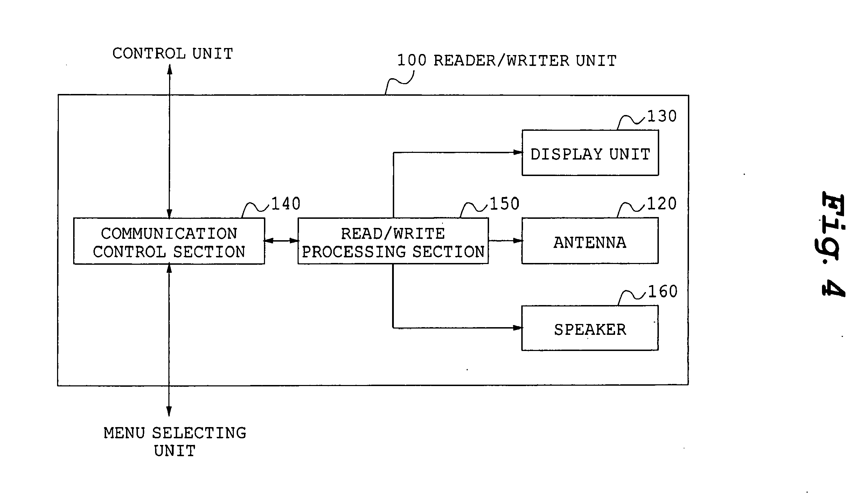

The reader/writer unit 100 will be explained with reference to FIGS. 3 and 4. FIG 3 is an external perspective view of the reader/writer unit and FIG. 4 is a functional block diagram of the reader/writer unit.

As shown in FIG. 3, the reader/writer unit 100 includes a housing 110 curved in the front thereof. An antenna 120 for communication with the IC card 10 is annexed in the front lower part of the housing 110. A display unit 130 for displaying various messages is annexed in the front upper part of the housing 110. As shown in FIG. 4, the reader/writer unit 100 includes a communication control section 140 for connection to the control unit 300 and the menu selecting unit 200 and a read/write processing section 150 that controls reading of data from and writing of data in the IC card 10 on the basis of an instruction from the control unit 300. The reader/writer unit 100 includes a speaker 160 for emitting an operation sound, an alarm sound, a guidance sound, and the like.

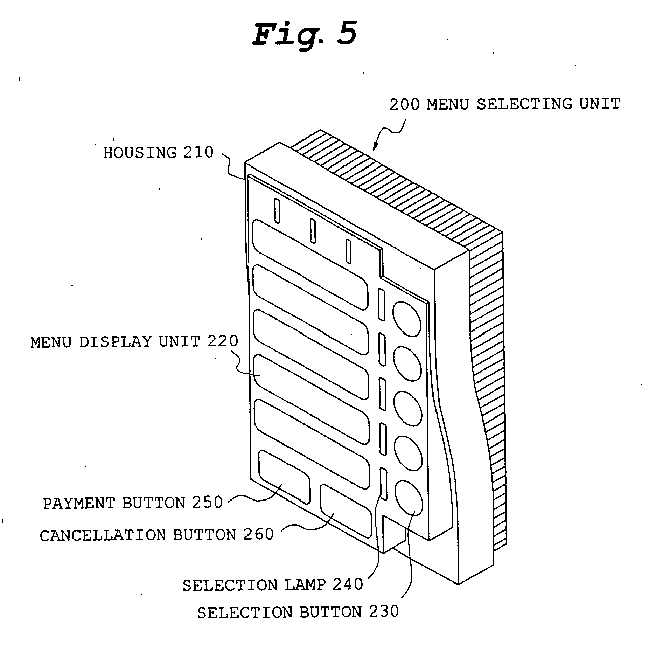

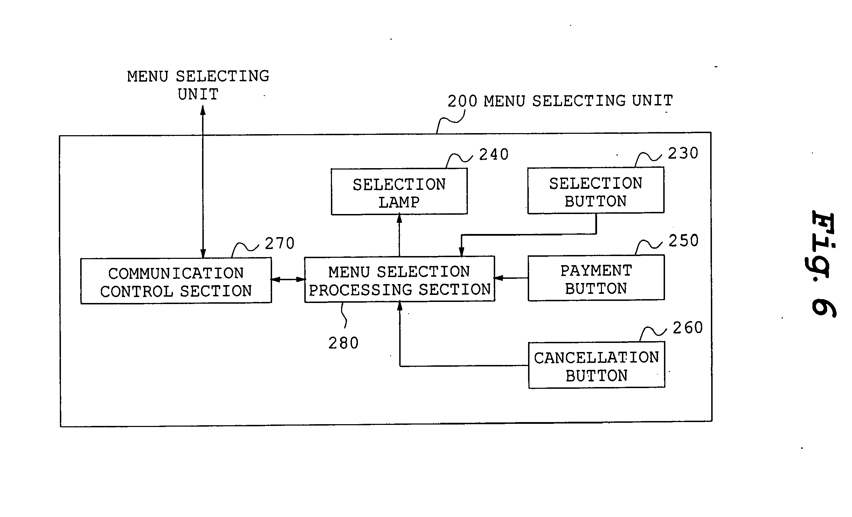

The menu selecting unit 200 will be explained with reference to FIGS. 5 and 6. FIG. 5 is an external perspective view of the menu selecting unit and FIG. 6 is a functional block diagram of the menu selecting unit.

As shown in FIG. 5, the menu selecting unit 200 includes, in the front of a housing 210, a menu display unit 220 in which a panel having a menu written thereon is inserted, a selection button 230 for menu selection annexed beside the menu display unit 220, and a selection lamp 240 for indicating that the menu is selected according to depression of the selection button 230. The menu selecting unit 200 includes plural sets (in an example in FIG. 5, five sets) of the menu display unit 220, the selection button 230, and the selection lamp 240. The menu selecting unit 200 includes, in the front lower part of the housing 210, a payment button 250 for instructing start of payment for the selected menu, and a cancellation button 260 for canceling the menu selection performed by the selection button 230. As shown in FIG. 6, the menu selecting unit 200 includes a communication control section 270 for connection to the reader/writer unit 100 and a menu selection processing section 280 that performs lighting control and the like for the selection lamp 240 on the basis of an instruction from the control unit 300.

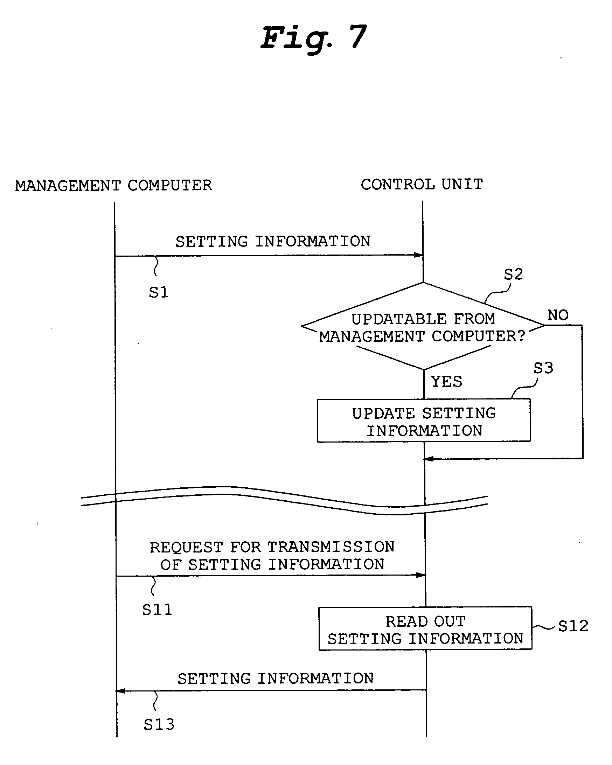

Operations concerning setting information of the payment system for restaurant will be explained with reference to FIG. 7. As shown in FIG. 7, when the management computer 500 transmits setting information to the control unit 300 (step S1), the setting information processing section 350 of the control unit 300 judges whether input and update of setting information from the management computer 500 are permitted with reference to the input method information stored in the input method information storing section 370 (step S2). If the input and update are permitted, the setting information processing section 350 updates the setting information stored in the setting information storing section 330 with the setting information received from the management computer 500 (step S3).

When the management computer 500 sends a request for transmission of the setting information to the control unit 300 (step S11), the setting information processing section 350 of the control unit 300 reads out the setting information from the setting information storing section 330 (step S12) and transmits the setting information to the management computer 500 (step S13).

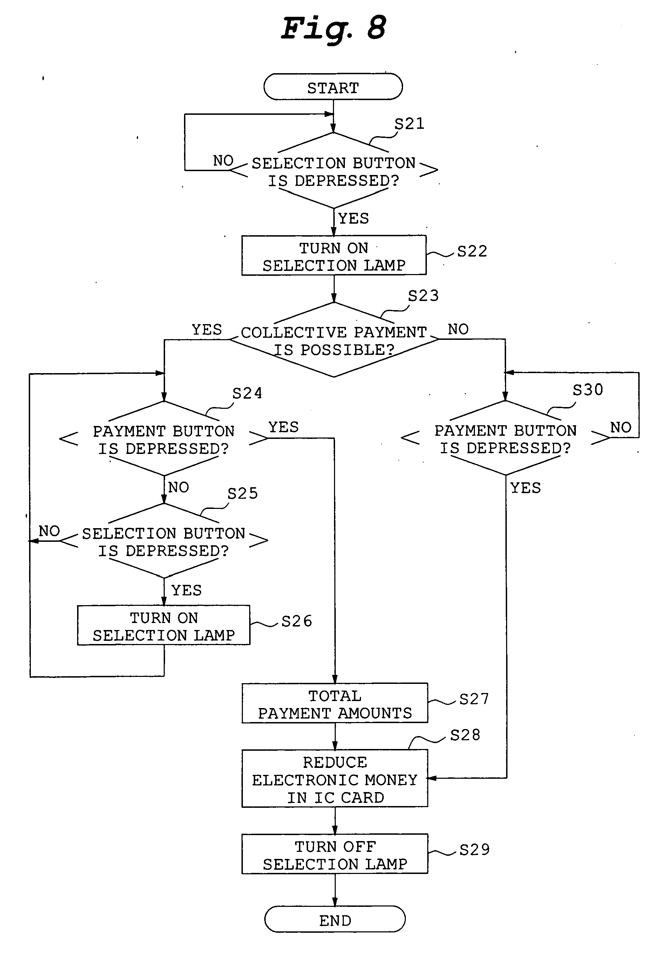

Operations concerning payment processing of the payment system for restaurant will be explained with reference to FIG. 8. When the payment processing section 340 of the control unit 300 detects depression of the selection button 230 of the menu selecting unit 200 (step S21), the payment processing section 340 turns on the selection lamp 240 corresponding to the selection button 230 (step S22). The payment processing section 340 judges whether collective payment is possible with reference to the collective payment possibility information of the setting information stored in the setting information storing section 330 (step S23).

If the collective payment is possible, the payment processing section 340 detects depression of another selection buttons 230 (step S25) and continues processing for turning on the selection lamp 240 corresponding to the selection button 230 (step S26) until the payment processing section 340 detects depression of the payment button 250 (step S24). When the payment processing section 340 detects depression of the payment button 250, the payment processing section 340 extracts prices of menus corresponding to the selection buttons 230 selected in steps S21 and S25 from the setting information storing section 330 and totals the prices (step S27). Subsequently, the payment processing section 340 performs processing for reducing the electronic money in the IC card 10 by an amount obtained by totaling the prices using the reader/writer unit 100 (step S28). Finally, the payment processing section 340 turns off all the selection lamps 240 have been lit (step S29).

On the other hand, if the collective payment is not possible, the payment processing section 340 extracts a price of a menu corresponding to the selection button 230 selected in step S21 from the setting information storing section 330 and performs processing for reducing the electronic money in the IC card 10 by the price using the reader/writer unit 100 (S28). Finally, the payment processing section 340 turns off the selection lamp 240 that has been lit (step S29) .

As explained above, according to the payment system for restaurant according to this embodiment, it is possible to input and update setting information for determining operations of payment processing from both the setting information input button 360 provided in the control unit 300 and the management computer 500. This is preferable in terms of flexibility of an operation. In particular, in this embodiment, it is possible to permit only one of the setting information input button 360 and the management computer 500 to input and update setting information as required. This is more preferable in terms of flexibility of an operation. The management computer 500 is not always necessary at the time of an operation. This makes it possible to build the system at low cost. Moreover, it is possible to check setting information of the control units 300 from the management computer 500 as required. This makes it possible to perform central management of the control units 300 in the management computer 500.

The embodiment of the invention has been described in detail. However, the invention is not limited to the embodiment. A scope of the invention is indicated by claims and all modifications within the meaning of the claims are included in the invention. The modifications are described below.

In the embodiment described above, the reader/writer unit 100 and the menu selecting unit 200 are connected to the control unit 300. However, a menu display unit for a kitchen may be further connected to the control unit 300. The menu display unit is a device for displaying a menu selected by the menu selecting unit 200. The menu display unit has a constitution obtained by removing the selection button 230, the payment button 250, and the cancellation button 260 from the menu selecting unit 200.

In the embodiment described above, the selection button 230, the selection lamp 240, and the like are provided only on one side of the menu selecting unit 200. However, the selection lamp 240 for indicating a selected menu may be provided on an opposite side. Such a unit is suitable in setting the menu selecting unit 200 in a counter or the like partitioning seats for customers and the kitchen.

Moreover, in the embodiment described above, the reader/writer unit 100 and the menu selecting unit 200 are connected to the control unit 300. However, the menu selecting unit 200 is not always necessary. Such a constitution without the menu selecting unit 200 is suitable in a restaurant operating with only one kind of menu. Note that, in order to cope with such an operation, the payment processing section 340 of the control unit 300 needs to change an operation of the payment processing. However, in the present invention, it is easy to cope with the change by updating setting information from the management computer 500 or the setting information input button 360.

Furthermore, in the embodiment described above, the IC card 10 embedded with the non-contact IC chip is explained. However, the non-contact IC chip is mountable on various devices and articles such as a cellular phone, a wristwatch, a Personal Digital Assistant (PDA), a computer, a bracelet, a ring, and earrings.

## Claims

1. A payment system for restaurant comprising:
a reader/writer unit (100) which reads data from and writes data in a non-contact IC chip (10) functioning as an electronic wallet in a non-contact manner; and
a control unit (300) for performing payment by electronic money using the reader/writer unit (100),
wherein the control unit (300) includes:
setting information inputting means (360) for inputting setting information;
setting information storing means (330) for storing the setting information inputted;
payment processing means (340) for performing payment process by the electronic money using the reader/writer unit (100) on the basis of the setting information stored in the setting information storing means (330); and
a communication control means (310) for controlling data communication with an external computer (500) via a network (400),
the control unit (300) making the external computer (500) accessible to the setting information storing means(330).

2. The payment system for restaurant according to claim 1, wherein the control unit (300) includes setting information processing means (350) for inputting setting information received from the external computer (500) to the setting information storing means (330).

3. The payment system for restaurant according to claim 1, wherein the control unit (300) includes setting information processing means (350) for transmitting the setting information stored in the setting information storing means (330) to the external computer (500) in response to a request from the external computer (500).

4. The payment system for restaurant according to claim 1, having plural sets of the control unit (300) and the reader/writer unit (100), wherein;
each control unit (300) connects with the common network (400), and the external computer (500) accesses to the setting information storing means (330) of the control units (300) via the network (400).

5. The payment system for restaurant according to claim 1, wherein the control unit (300) includes:
input method information storing means (370) for storing input method information for determining a method of inputting setting information to the setting information storing means (330); and
setting information processing means (350) for restricting input of setting information from the setting information inputting means (360) or the external computer (500) on the basis of the input method information.

6. The payment system for restaurant according to claim 1, including a menu item selecting unit (200) that selects a menu item, and
said setting information at least includes information on whether it is possible to select plural menu items with the menu item selecting unit (200) and make payment for the plural menu items.
